# EUROPEAN PATENT APPLICATION

(11) **EP 3 916 325 A1**
(43) Date of publication of application: **01.12.2021**
(21) Application number: 21175560.8
(22) Date of filing: 24.05.2021
(51) Int. Cl.: F25D 23/06

(54) **APPLIANCE LINER**

(30) Priority: 29.05.2020 US 202016887504
(71) Applicant: Whirlpool Corporation, Benton Harbor, MI 49022 (US)
(72) Inventor: Khizar, Muhammad, 21024 Cassinetta di Biandronno (VA) (IT)
(74) Representative: Spina, Alessandro

(57) **Abstract**

An appliance liner (200) includes a cap layer (210) including a high-impact polystyrene and a colorant, the cap layer (210) forming an exterior surface (202) of the appliance liner (200). The appliance liner (200) also includes a polymeric base layer (230) including a high-impact polystyrene and positioned inwardly with respect to the cap layer (210) to provide structural support to the cap layer (210); and a barrier film (220) positioned inwardly with respect to the cap layer (210). The barrier film (220) includes silk fibers (222) within a polymer matrix (224) to protect the cap layer (210) from contaminant diffusion and deformation and reduce visible wrinkling in the cap layer (210) during hot insulation filling. Methods for forming the appliance liner (200) are also provided.

## Description

### TECHNICAL FIELD

The present application is directed to liners for appliances, and more particularly materials and methods for forming the liner system.

### BACKGROUND

Appliances, such as refrigeration appliances, conventionally include liners within the cabinet area of the appliance. The interior of the cabinets may have design goals related to aesthetic appearance of the liner. As such, the liners may be colored or have hues or tints, based on consumer desires or aesthetic considerations. The liners are conventionally multi-layer systems produced via extrusion. Conventional liners may require pigments in each independent extruded layer to form a colored liner, resulting in complex and expensive production (e.g., matching layer colors, or pigment cost).

### SUMMARY

According to one or more embodiments, an appliance liner includes a cap layer including a high-impact polystyrene and a colorant, the cap layer forming an exterior surface of the appliance liner. The appliance liner also includes a polymeric base layer including a high-impact polystyrene and positioned inwardly with respect to the cap layer to provide structural support to the cap layer; and a barrier film positioned inwardly with respect to the cap layer. The barrier film includes silk fibers within a polymer matrix to protect the cap layer from contaminant diffusion and deformation and reduce visible wrinkling in the cap layer during hot insulation filling.

According to at least one embodiment, the polymeric base layer may be positioned between and in contact with the cap layer and the barrier film. In another embodiment, the barrier film may be positioned between and in contact with the cap layer and the polymeric base layer. In one or more embodiments, the silk fibers may be included in the polymer matrix at 2.5 to 15% loading by weight. In at least one embodiment, the silk fibers may have an average length of 10 to 90 mm. In certain embodiments, the polymeric base layer may be a 1170 HIPS material and the cap layer may be a 1115 HIPS material. In at least one embodiment, the polymer matrix may be a thermoplastic polyurethane, a high-impact polystyrene, or both. In further embodiments, the polymer matrix may be a 1115 HIPS material.

According to one or more embodiments, a method of forming an appliance liner includes extruding a mixture of a high-impact polystyrene and a colorant to form a cap layer, and hot-laminating a barrier film including silk fibers dispersed in a polymer matrix with the cap layer to form a composite sheet. The method further includes extruding a high-impact polystyrene base material to form a base sheet, and hot-laminating the base sheet with the composite sheet such that the barrier film is sandwiched between the cap layer and the base sheet to form a laminated appliance liner.

According to at least one embodiment, the silk fibers may be included in the polymer matrix at 2.5 to 15% loading by weight. In one or more embodiments, the polymer matrix may be a thermoplastic polyurethane, a high-impact polystyrene, or both. In some embodiments, the method may further include extruding a bulk material including the silk fibers in a polymer matrix resin to form the barrier film. In at least one embodiment, the silk fibers may have an average length of 10 to 90 mm. In one or more embodiments, the method may further include thermo-forming the laminated appliance liner to form a shaped appliance liner.

According to one or more embodiments, a method of forming an appliance liner includes extruding a first mixture of a high-impact polystyrene and a colorant to form a cap layer; extruding a second mixture of silk fibers dispersed in a polymer matrix to form a barrier film; and extruding a high-impact polystyrene base material to form a base layer. The method further includes joining the cap layer, the barrier film, and the base layer such that the cap layer is an outer layer of the appliance liner and the barrier film is positioned inwardly with respect to the cap layer to protect the cap layer from contaminant diffusion and deformation and reduce visible wrinkling in the cap layer during hot insulation filling.

According to at least one embodiment, the joining may be via tri-extrusion of the cap layer, the barrier film, and the base layer, and one or both of the base layer and the barrier film may include a pigment additive. In other embodiments, the joining may include hot-laminating the cap layer and barrier film to the base layer such that the base layer is between the cap layer and barrier film. In yet other embodiments, the joining may include hot-laminating the cap layer to the barrier film to form a composite sheet. In a further embodiment, the joining may include hot-laminating the composite sheet with the base layer to form the appliance liner. In at least one embodiment, the joining may include hot-laminating the barrier film to the base layer to form a composite base, and hot-laminating the composite base with the cap layer to form the appliance liner.

### BRIEF DESCRIPTION OF THE DRAWINGS

FIG. 1 is a schematic illustration of an appliance, according to an embodiment;
FIG. 2A is a schematic cross-sectional view of an appliance with an appliance liner, according to an embodiment;
FIG. 2B is a schematic cross-sectional view of an appliance with an appliance liner, according to another embodiment;
FIG. 3 is a schematic illustration of a system for forming the appliance liner of FIG. 2A, according to an embodiment; and
FIGS. 4A-B are schematic illustrations of a system for forming the appliance liner of FIG. 2B, according to an embodiment.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Conventional colored liners may also show scratches or defects in the liner surface where the pigment is incorporated in each extruded layer, causing issues in the aesthetics of the interior cabinet. Furthermore, colored layers of conventional liners may show other defects, such as wrinkling in the various layers, formed during the hot-filling of foam insulation in appliance cavities on an inner side of the conventional liner. Generally, conventional liners include a protective barrier layer on the inner side of the liner to help protect the outer layers. The protective barrier layer prevents hot-filled foam insulation from aggressively attacking the colored layers of the conventional liners. However, the hot-filling may deform or wrinkle the protective barrier layer, the defects and/or wrinkles then being visible in the outer layer when conventional liners, and moreover when the outer layer is pigmented.

According to one or more embodiments, an appliance liner system includes an outer colored cap layer defining an outer surface of the liner, and a barrier film layer including silk fibers for protecting the cap layer from contaminants and/or deformations. The appliance liner system, in certain embodiments, also includes a base layer providing structural integrity to the liner. The barrier film of the appliance liner system advantageously includes the silk fibers within a polymer matrix of thermoplastic polyurethane or high impact polystyrene. This addition of silk fibers to the polymer matrix improves compatibility of the barrier film with the base layer, and also reduces wrinkling in the barrier film that occurs during hot insulation filling, such that any wrinkling would not form or be visible through the cap layer.

In some embodiments, the barrier film is sandwiched between the colored cap layer and the base layer. In such embodiments, the colored cap layer may be the only pigmented layer due to the barrier film reducing the visibility of defects from the base layer in the cap layer and the ability to hot-laminate the barrier film directly to the extruded colored cap layer.

In other embodiments, the base layer is sandwiched between the colored cap layer and the barrier film. In such embodiments, the base layer, barrier film, or both may also include a pigment, with the barrier layer reducing the visibility of defects from the barrier film and base layer in the colored cap layer.

The appliance liner system may be formed by various methods. One such method includes extruding the colored cap layer, hot-laminating the colored cap layer with the barrier film with silk fibers to form a cap and barrier laminate, and hot-laminating the base layer to the cap and barrier laminate to sandwich the barrier layer between the base and cap layers. Another method includes hot-laminating the barrier film with silk fibers with the extruded base layer to form a composite, and then hot-laminating the composite with the colored cap layer to sandwich the base layer therebetween. In another variation, the extruded layers may be hot-laminated together at a single nip-point to form the appliance liner. Yet another method for forming the appliance liner includes tri-extrusion of the layers, with the barrier layer including silk fibers. The appliance liner and the methods of producing the appliance liner will now be discussed in detail.

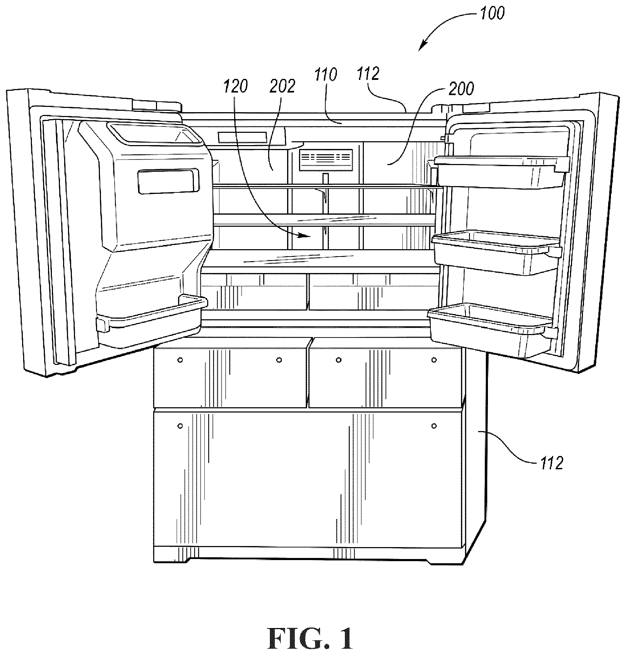

Referring to FIG. 1, an appliance 100 is shown according to an embodiment. Appliance 100 includes walls 110 forming an exterior body of the appliance 100. The walls 110 may have an interior surface (not shown in FIG. 1) and an exterior surface 112 towards the outside of appliance 100. A liner 200 is positioned as an inner surface on the interior surface side of walls 110, the liner 200 defining a cabinet 120. Although the appliance 100 is shown as a refrigeration appliance, appliance 100 may be any suitable appliance having a lined interior cabinet, such as, but not limited to, a refrigerator, freezer, ice maker, dishwasher, washer, or dryer. Thus, the depiction of a refrigerator is not intended to be limiting. The liner 200 has a visible surface 202 in cabinet 120, and may be mounted to the interior surface of the walls 110, or may be mounted to hot-filled foam insulation 102 (not shown in FIG. 1) disposed between the exterior surface 112 of walls 110 and the liner 200.

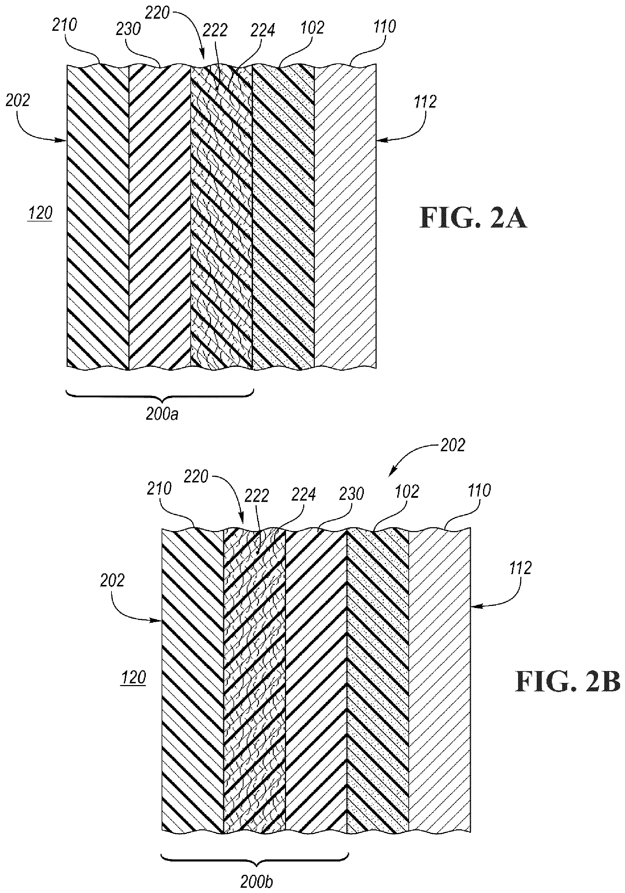

FIGS. 2A and 2B each illustrate schematic cross-sectional views of the liner 200, according to various embodiments, with the foam insulation 102 between liner 200 and wall 110. Generally, the liner 200 is formed of multiple layers which are joined with substantially no interfaces between them and without the use of adhesives. The liner 200 may have an overall thickness of about 0.05 to 1.0 inch in some embodiments, 0.1 to .75 inches in other embodiments, and 0.125 to 0.5 inches in other embodiments. In another embodiment, the liner 200 has a thickness of 0.175 to 0.45 inches. The liner 200 may include any suitable number of layers for forming an aesthetic visible surface 202 with structural integrity to form the interior cabinet 120 of the appliance 100, however for purposes of the presently disclosed embodiments, the liner 200 includes at least a cap layer 210 and a barrier film 220. In certain embodiments, the liner 200 further includes a polymeric base layer 230 for providing the desired structural integrity to the liner 200. The cap layer 210 provides the desired aesthetics (e.g., color, texture, etc.) of the interior of the appliance cabinet 120. The barrier film 220 protects the cap layer 210 from diffusion and appearance of contaminants, deformations, and/or defects in the cap layer from the mounting of the liner or from hot-filling foam insulation 102 into the space between the wall 110 and the liner 200, as will be discussed in detail below. Although FIGS. 2A-B show each layer being of similar thickness, it is understood that each layer may have any suitable thickness, and may have a unique thickness relative to another layer, and the thicknesses shown in FIG. 2A-B are not intended to be limiting.

Referring more specifically to FIG. 2A, a first embodiment of the appliance liner 200a is shown schematically according to an embodiment. As indicated in the appliance liner 200a, the base layer 230 is sandwiched between the cap layer 210 and the barrier film 220. Thus, in this embodiment, the barrier film 220 is exposed to the foam 102 on the interior side of the liner 200a towards the wall 110 of appliance 100. As the barrier film 220 is between the cap layer 210 and the foam 102, the barrier film 220 protects the cap layer 210 from diffusion and the appearance of contaminants, deformations (e.g., wrinkles), and/or defects in the cap layer 210 from hot-filling and mounting of the liner 200a to the foam 102.

In another embodiment, the appliance liner 200b as shown in FIG. 2B has the barrier film 220 sandwiched between the cap layer 210 and the base layer 230. In yet further approaches, additional layers (not shown) may be included between the cap layer 210, barrier film 220, and the base layer 230. However, it should be noted that the relative ordering of the layers may include the ordering of the barrier film 220 and the base layer 230 as shown in the appliance liner 200a or as shown in the appliance liner 200b, provided that the barrier film 220 remains between the cap layer 210 and foam 102 to protect the cap layer from any deformation or wrinkling during hot-fill of the foam 102 between the wall 110 and the liner 200. Regardless of whether the barrier film 220 directly contacts the cap layer 210 (as shown in the embodiment of FIG. 2B) or is separated from the cap layer 210 by the base layer 230 (as shown in the embodiment of FIG. 2A), the protective aspect of the barrier film 220 still applies.

With continued reference to FIGS. 2A-B, the barrier film 220 includes silk fibers 222 in a polymer matrix 224. Advantageously, these silk fibers 222 provide improvements in compatibility between the barrier film 220 and the base layer 230 as compared with barrier films lacking silk fibers. Furthermore, silk fibers 222 improve the performance of the barrier film 220 by reducing the potential for wrinkling in the barrier film 220 during the hot-filling of the foam 102, and thus reducing appearance of wrinkles and/or deformations in the cap layer 210. The barrier film 220 is formed in any suitable manner, such as, but not limited to extrusion. The barrier film 220 may be mono-extruded prior to hot-lamination with the cap layer 210 and/or the base layer 230, or be a co-extruded layer with the silk fibers 222 being included in the barrier film 220 bulk material, as will be discussed in detail.

To form the barrier film 220, the silk fibers 222 are loaded in the polymer matrix 224. The polymer matrix 224 may be a high impact polystyrene (HIPS), a thermoplastic polyurethane, or combinations thereof. In certain embodiments, the polymer matrix 224 is a 1115 HIPS. The barrier film 220 may include, in some embodiments, 2.5 to 15% by weight of silk fibers 222 in the polymer matrix 224, in other embodiments 3 to 12.5% by weight of silk fibers 222 in the polymer matrix 224, and in yet other embodiments, 4 to 10% by weight of silk fibers 222 in the polymer matrix 224. In at least one embodiment, the silk fibers 222 are 5 to 7% by weight in the polymer matrix 224. Furthermore, the silk fibers 222 may be, in some embodiments, 2.5 to 15% by weight of the barrier film 220, in other embodiments 3 to 12.5% by weight of the barrier film 220, in yet other embodiments, 4 to 10% by weight of the barrier film 220. In at least one embodiment, the silk fibers 222 are 5 to 7% by weight of the barrier film 220. The silk fibers may have any suitable length and/or diameter to protect the cap layer 210 from having visible deformations and/or wrinkles, and be present in the polymer matrix at the specified weight. For example, the silk fibers may have, in some embodiments, an average fiber length of 10 to 90 mm, in other embodiments 20 to 80 mm, and in yet other embodiments, 30 to 60 mm. Furthermore, in certain embodiments, the silk fibers may have an average diameter of 5 to 80 µm, in other embodiments, 10 to 60 µm, and in yet other embodiments 15 to 50 µm. Although in the monolayer construction of the overall liner 200 there are no interfaces between the layers, the region of the liner constituting the barrier film 220 may have a thickness in some embodiments of 0.05 to 1.5 mm, in other embodiments 0.1 to 1.25 mm, and in yet other embodiments 0.25 to 0.75 mm. The barrier film 220 may optionally include a colorant or pigment additive to tint the barrier layer, in embodiments where, for example, tri-extrusion is used.

With respect to the cap layer 210, the cap layer 210 may comprise any suitable polymeric material meeting the desired aesthetics of the interior of the appliance cabinet 120. In one or more embodiments, the cap layer 210 is a high-impact polystyrene (HIPS) material. More particularly, the HIPS is a 1115 HIPS. The HIPS material may be classified by a numeral, such as, but not limited to, 1115 HIPS or 1170 HIPS, which refers to the polymer quality of the resin, with 1115 HIPS being shinier and glossier than the 1170 HIPS. Although in the monolayer construction of the overall liner 200 there are no interfaces between the layers, the region of the liner 200 constituting the cap layer 210 may have a thickness in some embodiments of 0.05 to 1.5 mm, in other embodiments 0.1 to 1.25 mm, and in yet other embodiments 0.25 to 0.75 mm.

As the cap layer 210 is generally visible in the interior cabinet 120, the cap layer 210 further includes a colorant or pigment additive (hereinafter referred to interchangeably) mixed with the high-impact polystyrene. The concentration of colorant including in the cap layer 210 may be any suitable amount sufficient for the liner 200 to have the aesthetically desired color, hue, or tinting. In certain embodiments, the colorant may be at a concentration of 2.5 to 50% by weight of the cap layer, in other embodiments, 5 to 40%, and in yet other embodiments 7 to 25%. The barrier film 220 and/or the base layer 230 may optionally include a colorant or pigment additive to tint the barrier layer and/or the base layer 230, respectively, which may aid in reducing the visibility of any defects from the formation of the liner 200 from showing through the coloration of the cap layer 210. The colorant may be included in base layer 230 and/or barrier film 220 at similar concentrations to the cap layer 210.

With respect to the base layer 230, the base layer 230 may comprise any suitable polymeric material meeting the desired structural integrity to the liner 200. In one or more embodiments, the base layer 230 is a high-impact polystyrene (HIPS) material. More particularly, the HIPS is a 1170 HIPS. Although other HIPS material may be incorporated, 1170 HIPS is a glossier and shinier HIPS than 1115 HIPS, as previously noted. Although in the monolayer construction of the overall liner 200 there are no interfaces between the layers, the region of the liner 200 constituting the base layer 230 may have a thickness in some embodiments of 0.05 to 1.5 mm, in other embodiments 0.1 to 1.25 mm, and in yet other embodiments 0.25 to 0.75 mm. The base layer 230 may optionally include a colorant or pigment additive to tint the base layer 230, in embodiments where, for example, tri-extrusion is used.

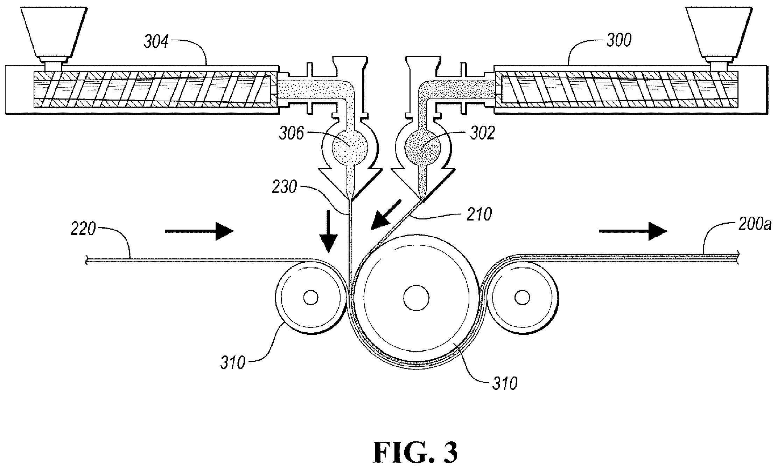

Referring to FIG. 3, a method for forming the appliance liner 200a of FIG. 2A is schematically depicted. Although the system of FIG. 3 is described as shown, other suitable arrangements and processes (e.g., co-extrusion or tri-extrusion) to form the appliance liner 200 are also contemplated. The method includes extruding, via extruder 300, a mixture 302 of a high-impact polystyrene material and a colorant to form a cap layer 210. In certain embodiments, the colorant may be at a concentration of 2.5 to 50% by weight of the mixture 302, in other embodiments, 5 to 40%, and in yet other embodiments 7 to 25%. The method also includes providing a barrier film 220 with silk fibers dispersed in a polymer matrix. The barrier film 220 is an extruded film, and may be mono-extruded prior to joining with the other layers. The barrier film 220 is extruded from a bulk material including the polymer matrix and the silk fibers. The method further includes extruding, via an extruder 304, a base layer 230 from a high-impact polystyrene material 306. The barrier film 220, base layer 230, and cap layer 210 are joined together at rollers 310 without an adhesive such to form appliance liner 200a, having a monolayer structure. The rollers 310 may be nip rollers that are heated (e.g., at a temperature of about 250 to 375 °F, in certain embodiments), thus resulting in a hot-lamination process to join together the layers to form the appliance liner 200. Although shown being joined via the rollers, it is contemplated that the layers may be co-extruded or tri-extruded to form the liner 200a. As shown in FIG. 3, the base layer 230 is sandwiched between the cap layer 210 and the barrier film 220, however in another embodiment (not shown), a similar system may be arranged to form the barrier film 220 sandwiched between the extruded cap layer 210 and the extruded base layer 230, as liner 200b in FIG. 2B, where all three layers are joined at a single nip-point.

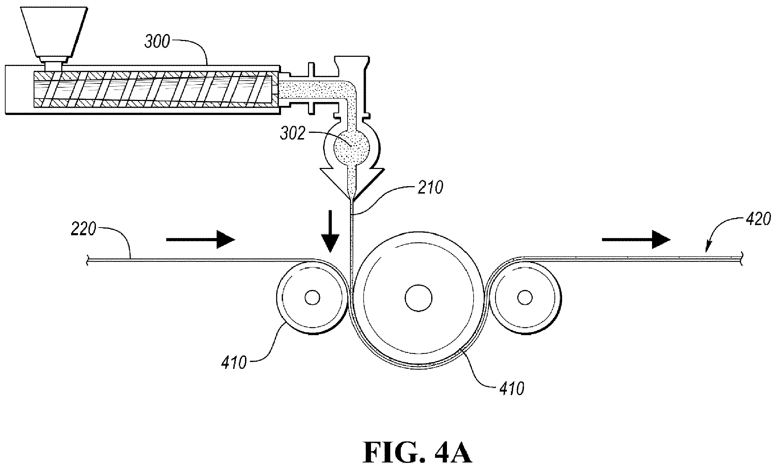

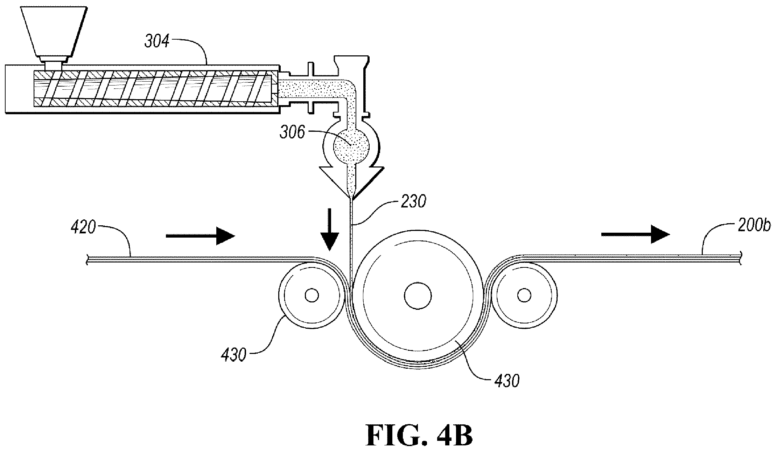

Referring to FIGS. 4A-B, another method for forming an appliance liner is schematically shown. Particularly, the method shown in FIGS. 4A-B is an embodiment for forming the appliance liner 200b of FIG. 2B, where the barrier film 220 is sandwiched between the base layer 230 and the cap layer 210. In FIG. 4A, a cap layer 210 is extruded, via extruder 300, from a mixture 302 of a high-impact polystyrene material and a colorant. The method also includes providing a barrier film 220 with silk fibers 222 dispersed in a polymer matrix 224. The barrier film 220 may be extruded, as previously discussed. The cap layer 210 and barrier film 220 are then hot-laminated together by rollers 410, to form a cap-barrier laminate 420. The method further includes, as shown in FIG. 4B, extruding, via extruder 400, a base layer 230 from a high-impact polystyrene material 402. The cap-barrier laminate 420 is then joined together with the extruded base layer 230 at rollers 430 without an adhesive to form appliance liner 200b, having a monolayer structure. Thus, the barrier film 220 is sandwiched between the cap layer 210 and the base layer 230. The rollers 410, 430 may be nip rollers that are heated (e.g., at a temperature of about 250 to 375 °F, in certain embodiments), thus resulting in a hot-lamination process to join together the layers to form the appliance liner 200b.

By incorporating the above methods and the silk-fiber barrier film, only the cap layer in certain embodiments requires inclusion of the colorant. Via the hot-lamination processing, dilution of the pigment and mixing issues between the layers is avoided, and the colorant remains visible in the cap layer after joining with the barrier film and/or base layer. However, the appliance liners with a silk fiber barrier layer may also be formed using other methods such as, but not limited to, tri-extrusion (not shown), with colorant added to each layers feed polymer.

According to one or more embodiments, an appliance liner system includes an outer colored cap layer and a barrier film layer. The barrier film of the appliance liner system includes silk fibers within a polymer matrix of thermoplastic polyurethane or high impact polystyrene reduce wrinkling in the barrier film such that wrinkling is not visible in the cap layer. Furthermore, the appliance liner may include a polymeric base layer for providing structural support to the liner. The silk fibers of the barrier film further improve compatibility of the barrier film with the base layer. In certain embodiments, the barrier film is sandwiched between the cap layer and the base layer, and in other embodiments the base layer is sandwiched between the cap layer and the barrier film. The barrier film is positioned on the inner side of the colored cap layer to protect the cap layer from contaminants and/or deformations during insulation filling for the appliance. The appliance liner may be extruded as a monolayer including the extruded cap layer, barrier film, and base layer, or be separately extruded such that the layers are hot-laminated together. In certain embodiments, the barrier film is hot laminated with the cap layer to form a composite sheet, which is then hot-laminated with the base layer. In other embodiments, the barrier film may be hot-laminated with an extruded base layer and subsequently hot-laminated with an extruded cap layer. As such, an appliance liner with silk fibers in the barrier film provides improvements in the aesthetic appearance on the surface of the outer cap layer.

Except where otherwise expressly indicated, all numerical quantities in this disclosure are to be understood as modified by the word "about" in describing the broader scope of this disclosure. Practice within the numerical limits stated is generally preferred. Also, unless expressly stated to the contrary, the description of a group or class of materials by suitable or preferred for a given purpose in connection with the disclosure implies that mixtures of any two or more members of the group or class may be equally suitable or preferred. Furthermore, practice within the numerical limits stated is generally preferred.

Additionally, unless expressly stated to the contrary: the term "polymer" includes "oligomer," "copolymer," "terpolymer," and the like; molecular weights provided for any polymers refers to weight average molecular weight unless otherwise indicated; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended claims, the singular form "a," "an," and "the" comprise plural referents unless the context clearly indicates otherwise. For example, reference to a component in the singular is intended to comprise a plurality of components.

The term "comprising" is synonymous with "including," "having," "containing," or "characterized by." These terms are inclusive and open-ended and do not exclude additional, unrecited elements or method steps.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ..., 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. In the specific examples set forth herein, thickness, concentrations, temperature, and reaction conditions (e.g. pressure, pH, etc.) can be practiced with plus or minus 50 percent of the values indicated rounded to three significant figures. In a refinement, concentrations, temperature, and reaction conditions (e.g., pressure, pH, etc.) can be practiced with plus or minus 30 percent of the values indicated rounded to three significant figures of the value provided in the examples. In another refinement, concentrations, temperature, and reaction conditions (e.g., pH, etc.) can be practiced with plus or minus 10 percent of the values indicated rounded to three significant figures of the value provided in the examples.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. An appliance liner (200) formed of multiple layers comprising:
a cap layer (210) including a high-impact polystyrene and a colorant, the cap layer (210) forming an exterior surface (202) of the appliance liner (200);
a polymeric base layer (230) including a high-impact polystyrene suitable to provide structural support to the cap layer (210); and
a barrier film (220) positioned inwardly with respect to the cap layer (210), and including silk fibers (222) within a polymer matrix (224) to protect the cap layer (210) from contaminant diffusion and deformation and reduce visible wrinkling in the cap layer during hot insulation filling,
wherein said cap layer, polymeric base layer and barrier film are joined with no interfaces between them,
and wherein the polymeric base layer (230) is sandwiched between the cap layer (210) and the barrier film (220) or the barrier film (220) is sandwiched between the cap layer (210) and the polymeric base layer (230).

2. The appliance liner (200) of claim 1, wherein the silk fibers (222) are included in the polymer matrix (224) at 2.5 to 15% loading by weight.

3. The appliance liner (200) of claim 1, wherein the silk fibers (222) have an average length of 10 to 90 mm.

4. The appliance liner (200) of claim 1, wherein the polymeric base layer (230) is a 1170 HIPS material and the cap layer (210) is a 1115 HIPS material.

5. The appliance liner (200) of claim 1, wherein the polymer matrix (224) is a thermoplastic polyurethane, a high-impact polystyrene, or both.

6. The appliance liner (200) of claim 5, wherein the polymer matrix (224) is a 1115 HIPS material.

7. A method of forming an appliance liner (200) comprising:
extruding a first mixture of a high-impact polystyrene and a colorant to form a cap layer (210);
extruding a second mixture of silk fibers (222) dispersed in a polymer matrix (224) to form a barrier film (220);
extruding a high-impact polystyrene base material to form a base layer (230); and
joining the cap layer (210), the barrier film (220), and the base layer (230) such that the polymeric base layer (230) is sandwiched between the cap layer (210) and the barrier film (220) or the barrier film (220) is sandwiched between the cap layer (210) and the polymeric base layer (230).

8. The method of claim 7, wherein the joining is via tri-extrusion of the cap layer (210), the barrier film (220), and the base layer (230), and one or both of the base layer (230) and the barrier film (220) include a pigment additive.

9. The method of claim 8, wherein the joining includes hot-laminating the cap layer (210) and barrier film (220) to the base layer (230) such that the base layer (230) is between the cap layer (210) and barrier film (220).

10. The method of claim 7, wherein the joining includes hot-laminating the cap layer (210) to the barrier film (220) to form a composite sheet (420).

11. The method of claim 10, wherein the joining further includes hot-laminating the composite sheet (420) with the base layer (230) to form the appliance liner (200).

12. The method of claim 7, wherein the joining includes hot-laminating the barrier film (220) to the base layer (230) to form a composite base, and hot-laminating the composite base with the cap layer (210) to form the appliance liner (200).

13. The method of claim 9, wherein the silk fibers (222) are included in the polymer matrix (224) at 2.5 to 15% loading by weight, and have an average length of 10 to 90 mm.
